# EUROPÄISCHE PATENTSCHRIFT

(11) **EP 3 061 578 B1**
(45) Veröffentlichungstag und Bekanntmachung des Hinweises auf die Patenterteilung: **11.10.2017**
(21) Anmeldenummer: 16157045.2
(22) Anmeldetag: 24.02.2016
(51) Int. Cl.: B25J 19/00, B25J 19/06

(54) **ROBOTERWERKZEUG, PROZESSEINRICHTUNG UND BETRIEBSVERFAHREN**
ROBOTIC TOOL, PROCESS DEVICE AND METHOD OF OPERATION
OUTIL ROBOT, MOYEN DE TRAITEMENT ET PROCEDE DE FONCTIONNEMENT

(30) Priorität: 25.02.2015 DE 202015100913 U
(43) Veröffentlichungstag der Anmeldung: 31.08.2016
(73) Patentinhaber: KUKA Systems GmbH, 86165 Augsburg (DE)
(72) Erfinder: MAYR, Stefan, 86316 Friedberg (DE)
(74) Vertreter: Ernicke, Klaus Stefan

(56) Entgegenhaltungen:
- WO-A1-2015/082485
- DE-A1-102013 002 813
- DE-U1-202013 104 389
- DE-U1-202013 104 544
- JP-A- S6 263 043
- JP-A- H09 285 992

## Beschreibung

Die Erfindung betrifft ein Roboterwerkzeug, eine Prozesseinrichtung und ein Betriebsverfahren mit den Merkmalen im Oberbegriff der Verfahrens- und Vorrichtungshauptansprüche.

Aus der DE 10 2013 002 813 A1 ist ein chirurgisches Roboterwerkzeug mit einer Klemmvorrichtung zum lösbaren Halten eines chirurgischen Gegenstands bekannt. Eine folienartige oder tuchartige sterile Schutzhülle umgibt den chirurgischen Roboter und die Klemmbacken der Klemmvorrichtung. Eine besondere Konstruktion der Klemmvorrichtung vermeidet eine Beschädigung der Schutzhülle bei der Klemmbetätigung.

Die JP S62-63043 A befasst sich mit einem Bohrwerkzeug und einer umgebenden balgartigen Absaughaube an einem Roboterarm, die vom Roboterarm gemeinsam an ein Werkstück abgesenkt werden.

Die JP H09-285992 A lehrt eine Sicherheitseinrichtung für einen Roboter, die u.a. einen topfartigen Schutzkragen mit vorgegebener Größe an einem Greifwerkzeug aufweist. Der Schutzkragen bedeckt den hinteren Mechanikteil des Greifwerkzeugs, wobei die Greifbacken und ein dort aufgenommenes Werkstück nicht bedeckt sind.

Aus der Praxis sind Roboterwerkzeuge in Form von Greifeinrichtungen bekannt, mit denen automatisch Werkstücke gegriffen und transportiert sowie positioniert werden. Dies kann zu Unfallschutzproblemen mit einem Werker führen, der sich im Arbeitsbereich des Roboters aufhält.

Die DE 10 2008 019 021 A1 und DE 10 2012 217 764 A1 zeigen Schutzvorrichtungen für Fräser und Spritzdüsen von Roboterwerkzeugen, die nur das Roboterwerkzeug schützend umgeben und nur bei dessen Nichtgebrauch wirksam sind. Im Bearbeitungsbetrieb an einem Werkstück geben sie das Roboterwerkzeug frei und werden entfernt, wobei sie keine Funktion für das Werkstück haben.

Es ist Aufgabe der vorliegenden Erfindung, eine verbesserte Sicherheitstechnik für ein Roboterwerkzeug aufzuzeigen.

Die Erfindung löst diese Aufgabe mit den Merkmalen in den Verfahrens- und Vorrichtungshauptansprüchen.

Das Roboterwerkzeug und die damit ausgerüstete Prozesseinrichtung sowie das Betriebsverfahren haben den Vorteil, dass die Verletzungsgefahr eines im Arbeitsbereich befindlichen Werkers deutlich verringert wird.

Der Effektor des Roboterwerkzeugs und zumindest ein Teil des Werkstücks können gegen einen Werkerzugriff von außen abgeschirmt werden. Insbesondere die Schnittstelle oder Verbindungsstelle zwischen Effektor und Werkstück kann geschützt werden. Die Abschirmung erfolgt mittels einer bevorzugt durchmesservariablen Schutzeinrichtung des Roboterwerkzeugs, welche einen Schutzkragen bildet und die erwähnten Effektor- und Werkzeugbereiche umschließt.

Die Schutzeinrichtung ist verstellbar und lässt sich an unterschiedliche Werkstücke, insbesondere variierende Werkstückdurchmesser, anpassen. Dies erlaubt einen engen Anschluss der Schutzeinrichtung an die Außenkontur des Werkstücks. Die Anpassung erfolgt automatisch mittels einer steuerbaren Stelleinrichtung. Hierfür ist vorzugsweise eine steuertechnische Verbindung zwischen dem Roboterwerkzeug und einer Steuerung des Manipulators oder Industrieroboters vorhanden.

Die kragenförmige Schutzeinrichtung kann zu den Anpassungszwecken in der Weite verstellt werden.

Der Effektor wird auch in Anpassung an unterschiedliche Werkstücke verstellt. Die Verstellung können unabhängig voneinander und mittels separater Stelleinrichtungen erfolgen.

Die Ausbildung der Schutzeinrichtung als kranzartiger Schutzkragen aus mehreren vorzugsweise fingerförmigen Schutzelementen hat den Vorteil, dass sehr große Durchmesserunterschiede des Kranzes mit dem Faktor zwei oder größer erzielt werden können. Trotzdem bleiben dabei die Abstände zwischen den Schutzelementen so klein, dass sie der Werker mit seinen Fingern nicht durchdringen kann. Hierfür ist ein gegenseitiger Versatz der Schutzelemente quer zur Umfangsrichtung des von ihnen gebildeten Kranzes von Vorteil.

Für die Verstellung der Schutzelemente ist eine Führungseinrichtung vorhanden, die vorzugsweise als Kulissenführung ausgebildet ist. Sie weist mehrere einander überschneidende Führungsbahnen auf, mit denen die Schutzelemente jeweils im Eingriff stehen. Die Stelleinrichtung zur steuerbaren und angetriebenen Verstellung der Schutzelemente bzw. des Schutzkragens kann an der Führungseinrichtung angreifen und einen Träger mit Schutzbahnen bewegen, insbesondere drehen. Diese Antriebsbewegung führt zu einer gemeinsamen Verlagerungsbewegung aller Schutzelemente und zu einer uniformen Weitenverstellung des Schutzkragens. Der Bau- und Steueraufwand für das Roboterwerkzeug kann mit dieser Ausgestaltung der Schutzeinrichtung besonders niedrig und kostengünstig gehalten werden.

Der Effektor wird ebenfalls an unterschiedliche Werkstücke in der vorerwähnten Weise angepasst. Er kann für unterschiedliche Prozesszwecke unterschiedlich ausgebildet sein. Vorzugsweise ist er als Greifeinrichtung ausgebildet und weist ein oder mehrere Greifelemente auf. Diese sind z.B. vorzugsweise als Sauger ausgebildet und können einzeln oder gruppenweise angeordnet sein, wobei zur Werkstückadaption ihre Position am Roboterwerkzeug zu Adaptionszwecken einzeln oder gruppenweise verändert werden kann. Die Ausbildung der Greifelemente als Sauger oder Saugergruppen hat dabei den Vorteil einer leichten Anpassung an sehr unterschiedliche Werkstückgeometrien. In den Unteransprüchen sind weitere vorteilhafte Ausgestaltungen der Erfindung angegeben.

Ferner könne das Roboterwerkzeug, das Betriebsverfahren und die Prozesseinrichtung folgende Merkmale jeweils einzeln oder in beliebiger Kombination aufweisen.

Die Schutzeinrichtung ist verstellbar ausgebildet und kann an unterschiedliche Werkstücke, insbesondere verschiedene Werkstückdurchmesser, adaptiert werden bzw. ist adaptierbar ausgebildet.

Der Effektor ist verstellbar ausgebildet und kann an unterschiedliche Werkstücke, insbesondere verschiedene Werkstückformen, adaptiert werden kann bzw. ist adaptierbar ausgebildet.

Eine verstellbare Schutzeinrichtung und ein verstellbarer Effektor können unabhängig voneinander verstellt werden bzw. sind entsprechend verstellbar ausgebildet.

Das Roboterwerkzeug weist ein Gestell mit einem Anschluss für einen ein- oder mehrachsigen Manipulator, insbesondere einen mehrachsigen Industrieroboter, auf.

Die Schutzeinrichtung und der Effektor sind an einer Frontseite eines Gestells des Roboterwerkzeugs angeordnet.

Die Schutzeinrichtung und ggf. der Effektor ist/sind im wesentlichen konzentrisch zu einer zentralen Achse des Roboterwerkzeugs angeordnet.

Die Schutzeinrichtung weist Schutzelemente auf. Die Schutzelemente erstrecken sich in Richtung einer Achse, insbesondere einer zentralen Achse, des Roboterwerkzeugs.

Die Schutzelemente sind bevorzugt als Finger ausgebildet. Sie können verstellbar sein. Sie können auch in einem Kranz angeordnet sein, vorzugsweise in einem Kranz um die vorgenannte Achse des Roboterwerkzeugs. Der Kranz kann in der Weite verstellbar sein.

Das Roboterwerkzeug kann eine Führungseinrichtung für verstellbare Schutzelemente der Schutzeinrichtung aufweisen, die z.B. als Kulissenführung oder in anderer Weise ausgebildet sein kann.
Die Führungseinrichtung, insbesondere die Kulissenführung, kann einander überschneidende Führungsbahnen für die Schutzelemente aufweisen.
Jedes verstellbare Schutzelement kann an einer eigenen Führungsbahn angeordnet sein, die eine radiale oder windschiefe Ausrichtung zu der vorgenannten Achse des Roboterwerkzeugs aufweist.
Mehrere Schutzelemente können an einer gemeinsamen Führungsbahn angeordnet sein, die eine Spiralenform um die vorgenannte Achse des Roboterwerkzeugs aufweist.
Die Schutzelemente können einen Fuß mit einem verjüngten Zapfen für den Eingriff mit den Führungsbahnen und einen verbreiterten Sicherungsbund aufweisen.

Die Führungsbahnen der Führungseinrichtung, insbesondere der Kulissenführung, können an Trägern angeordnet sein.
Die Träger können parallel und relativ zueinander beweglich an einem Gestell des Roboterwerkzeugs gelagert sein.
Die Träger können plattenförmig ausgebildet sein und Schlitze oder Nuten zur Bildung von jeweiligen Führungsbahnen aufweisen.
Die Stelleinrichtung der Schutzeinrichtung kann mit einem Träger verbunden sein.
Die Stelleinrichtung kann ein steuerbares Antriebsmittel, insbesondere einen Motor, und ein Getriebe zur Verbindung mit dem Träger aufweisen.

Der verstellbare Effektor kann als Greifeinrichtung oder in anderer Weise ausgebildet sein. Der Effektor kann mehrere Effektorelemente, insbesondere Greifelemente, aufweisen. Mehrere Greifelemente können mittels einer Stelleinrichtung im Abstand zu der vorgenannten Achse des Roboterwerkzeugs verstellt werden bzw. verstellbar ausgebildet sein.
Die Greifelemente können als Sauger ausgebildet sein. Mehrere Greifelemente können gruppenweise angeordnet und gruppenweise verstellt werden bzw. verstellbar ausgebildet sein.
Die vorgenannten Ausgestaltungen von Greifelementen können analog auch für andere Effektorelemente gelten.

Die Schutzeinrichtung und der Effektor, insbesondere deren Stelleinrichtungen, können mit einer Steuerung des Manipulators, insbesondere einer Robotersteuerung, verbunden sein. Sie können von dieser Steuerung betätigt werden.

Die Erfindung ist in den Zeichnungen beispielhaft und schematisch dargestellt. Im Einzelnen zeigen:
- Figur 1 und 2:: ein Roboterwerkzeug mit einer Schutzeinrichtung und einer Greifeinrichtung sowie unterschiedlichen Werkstücken in perspektivischer Ansicht,

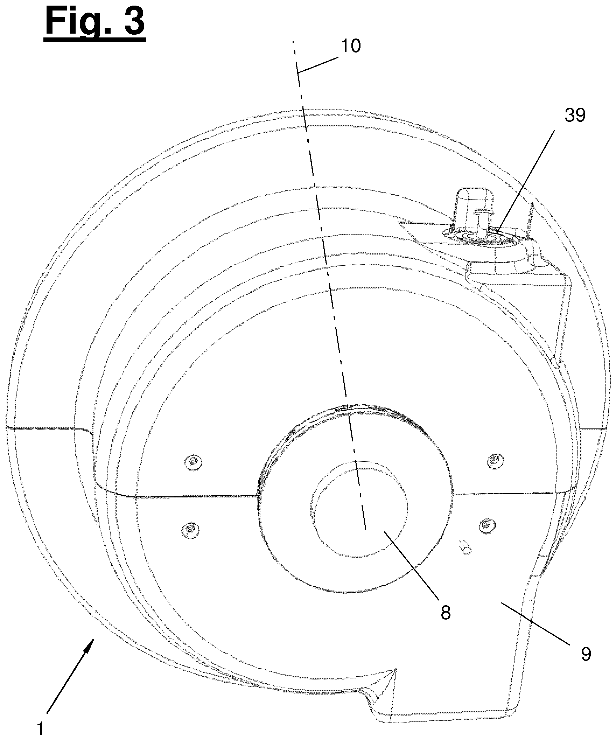

- Figur 3:: eine rückseitige perspektivische Ansicht des Roboterwerkzeugs,
- Figur 4:: eine perspektivische Vorderansicht des Roboterwerkzeugs von Figur 1 mit einer ausschnittsweise dargestellten Führungseinrichtung für Finger der Schutzeinrichtung,
- Figur 5:: eine Draufsicht auf das Roboterwerkzeug von Figur 1 mit Werkstück,
- Figur 6:: die Ansicht von Figur 5 ohne Werkstück,
- Figur 7:: die Ansicht von Figur 6 mit sichtbaren spiralförmigen Führungsbahnen,
- Figur 8:: einen perspektivischen Querschnitt durch das Roboterwerkzeug und
- Figur 9:: eine Prozesseinrichtung mit einem Industrieroboter nebst Roboterwerkzeug und einem Werker.

Die Erfindung betrifft ein Roboterwerkzeug (1) und ein Verfahren zu dessen Betrieb. Die Erfindung ferner eine mit einem solchen Roboterwerkzeug (1) ausgerüstete Prozesseinrichtung (34).

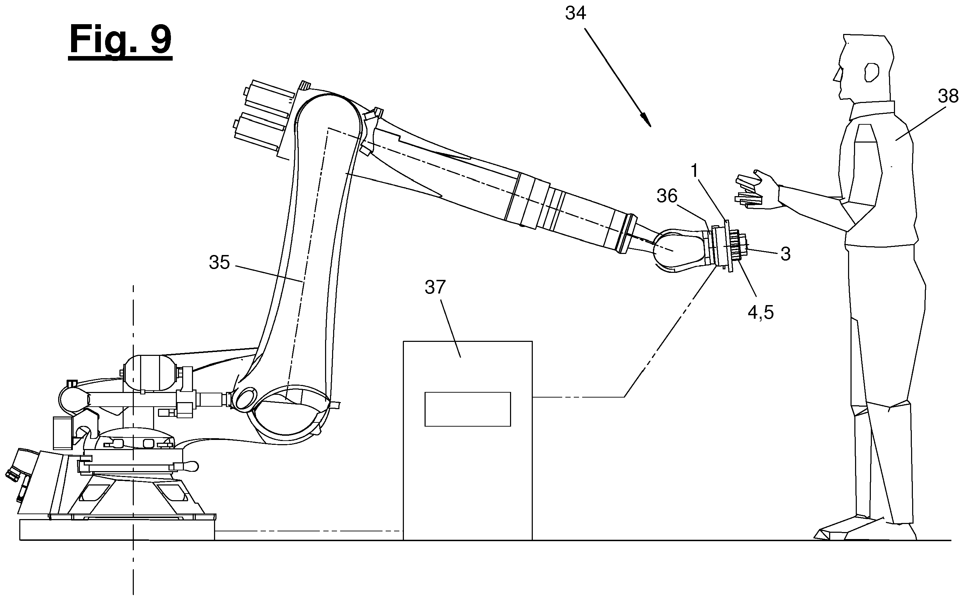

Figur 9 zeigt beispielhaft eine solche Prozesseinrichtung (34). Sie umfasst einen Manipulator (35) mit einer oder mehreren rotatorischen und/oder translatorischen Bewegungsachsen. Vorzugsweise ist der Manipulator (35) als Industrieroboter ausgebildet, der mehrere translatorische und/oder rotatorische Roboterachsen in beliebiger Zahl und Kombination aufweist. Der Industrieroboter (35) ist an seinem Abtriebselement (36), z.B. einem um die Abtriebsache rotierenden Abtriebsflansch, mit dem Roboterwerkzeug (1) unmittelbar oder mittelbar über eine zwischengeschaltete automatische Wechselkupplung verbunden. Der Industrieroboter (35) ist z.B. als sechsachsiger Lenkarmroboter oder Knickarmroboter ausgebildet. Er ist mit einer Robotersteuerung (37) ausgerüstet. Im Arbeitsbereich des Industrieroboters (35) kann sich ein Werker (38) befinden. Die nachfolgende Beschreibung für einen Industrieroboter (35) gilt entsprechend auch für andere, in entsprechend angepasster Weise ausgebildete Arten von Manipulatoren.

Das Roboterwerkzeug (1) weist ein Gestell (7) mit einem Roboteranschluss (8) zur Verbindung mit dem Abtriebselement (36) oder mit einer Wechselkupplung auf. Eine Wechselkupplung kann als Medienkupplung ausgebildet sein und eine Übertragung von Betriebsmitteln zwischen roboterinternen Leitungen und dem Roboterwerkzeug (1) ermöglichen. Derartige Betriebsmittel können z.B. Fluide, insbesondere Druckluft, Hydrauliköl oder Kühlmittel, oder elektrische Leistungs- oder Signalströme oder dgl. sein. Der Roboteranschluss (8) kann an eine solche Medienübertragung angepasst sein. Alternativ oder zusätzlich kann das Roboterwerkzeug (1) einen Anschluss (39) für eine andere und externe Medienzuführung haben. Das Gestell (7) kann von einem Gehäuse (9) umgeben sein.

Der Begriff Roboterwerkzeug (1) umfasst beliebige Arten von robotergeführten oder manipulatorgeführten Werkzeugen. Auch Manipulatorwerkzeuge werden im Sinne der Erfindung als Roboterwerkzeuge bezeichnet.

Das Roboterwerkzeug (1) weist einen Effektor (4) für die Durchführung eines Prozesses mit einem Werkstück (2,3) und eine Schutzeinrichtung (5) auf für den Effektor (4) und das Werkstück (2,3). Die Schutzeinrichtung (5) umgreift und umschließt den Effektor (4) und zumindest einen Teilbereich des Werkstücks (2,3). Die Schutzeinrichtung (5) bildet einen ringartigen Schutzkragen um den Effektor (4) und das Werkstück (2,3), der einen Kontakt eines Werkers (38) mit dem Effektor (4) und der Schnittstelle oder Verbindungsstelle (6) zum Werkstück (2,3) verhindert.

Der Effektor (4) und die Schutzeinrichtung (5) sind an der Stirnseite des Roboterwerkzeugs (1), insbesondere des Gestells (7), angeordnet. Sie können dabei im wesentlichen konzentrisch zu einer zentralen Achse (10) des Roboterwerkzeugs (1) angeordnet und ausgerichtet sein. Diese kann mit der Abtriebsachse des Industrieroboters (35) fluchten.

Der Effektor (4) kann von beliebiger Art und Ausbildung sein. In den gezeigten und bevorzugten Ausführungsbeispielen ist der Effektor (4) als Greifeinrichtung für ein Werkstück (2,3) ausgebildet. Die nachfolgenden Erläuterungen und Merkmale für eine Greifeinrichtung (4) gelten entsprechend auch für andere Arten von Effektoren.

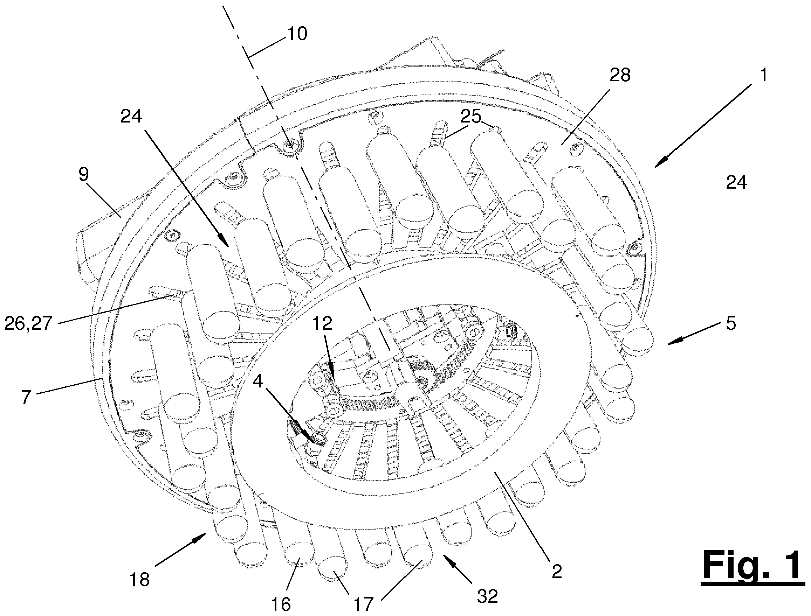

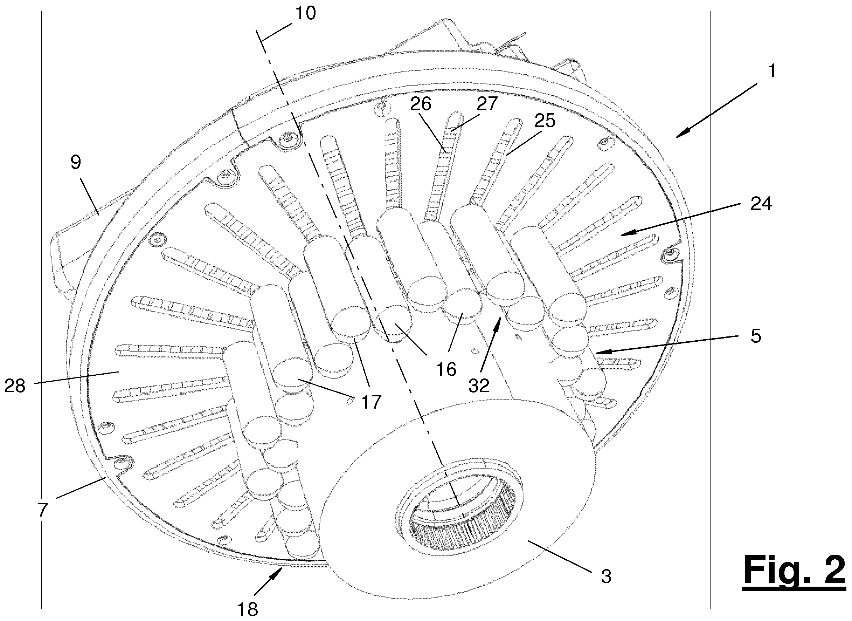

Mit der Greifeinrichtung (4) können gemäß Figur 1 und 2 verschiedene Arten von Werkstücken (2,3) gegriffen werden. Diese können sich in der Art und in der Größe, insbesondere im Durchmesser, unterscheiden. Die Greifeinrichtung (4) kann als Universalgreifer für alle Werkstückvarianten ausgebildet sein. In den gezeigten und bevorzugten Ausführungsbeispielen ist die Greifeinrichtung (4) verstellbar ausgebildet und kann an unterschiedliche Werkstücke (2,3) mittels einer steuerbaren und angetriebenen Stelleinrichtung (12) adaptiert werden.

Die Greifeinrichtung (4) weist ein oder mehrere Greifelemente (11) auf, die einzeln oder gruppenweise angeordnet sind. Die Greifelemente (11) sind z.B. als Sauger ausgebildet. Die Greifelemente (11) oder Elementgruppen sind z.B. diametral zur Achse (10) gegenüberliegend angeordnet. In den Ausführungsbeispielen sind drei Gruppen mit je drei Saugern (11) diametral gegenüberliegend angeordnet. Alternativ kann die Gruppenzahl größer sein, wobei auch eine Ringanordnung möglich ist. Die Greifelemente (11) können mittels der Stelleinrichtung (12) im Abstand zur Achse (10) verstellt werden.

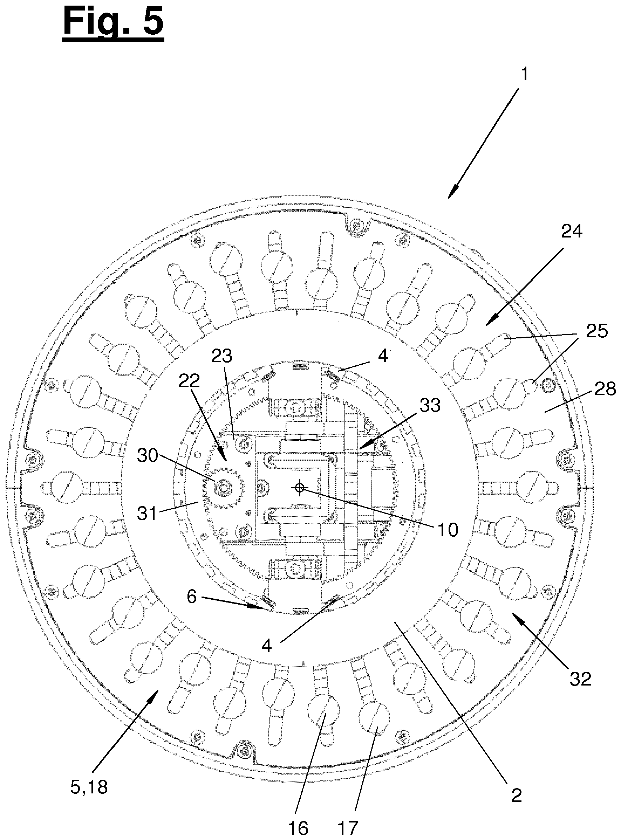

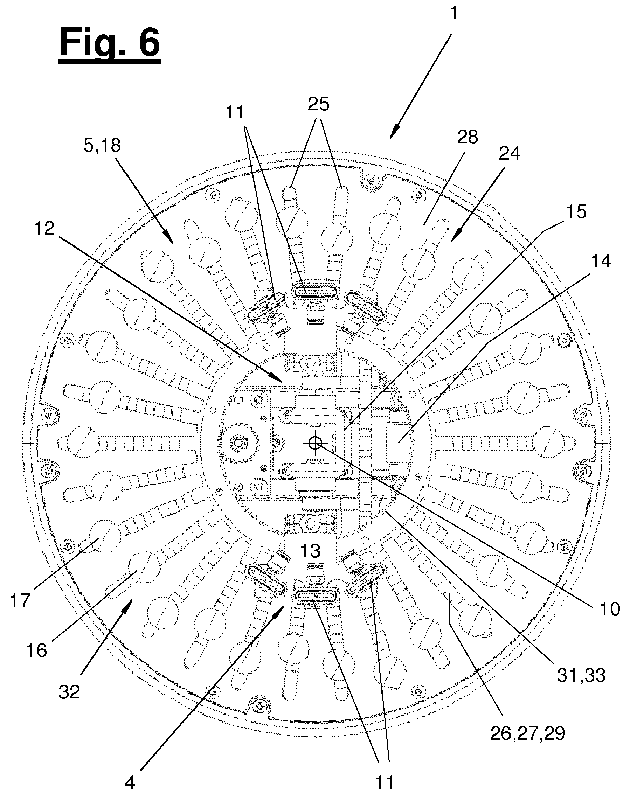

Die Stelleinrichtung (12) weist einen oder mehrere Träger (13) für ein einzelnes Greifelement (11) oder für eine Gruppe von Greifelementen (11) auf. Der Träger (13) ist z.B. als geradgeführter Schlitten gemäß Figur 5 bis 8 ausgebildet. Die Stelleinrichtung (12) weist ferner ein steuerbares Antriebsmittel (14) auf, dass z.B. als Motor, insbesondere Elektromotor ausgebildet ist. Das Antriebsmittel (14) ist über ein Getriebe (15) mit einem oder mehreren Trägern (13) verbunden. In der bevorzugten Ausführungsform genügt ein Antriebsmittel (14) für alle Greifelemente (11) und Schlitten (13) und sorgt für eine konzentrische radiale Verstellung. Das Antriebselement (14) und die Greifelemente (11) werden in der vorbeschriebenen Weise mit Betriebsmitteln versorgt. Die Stelleinrichtung (12) kann dabei signaltechnisch mit der Robotersteuerung (37) verbunden sein gemäß Figur 9.

Die Schutzeinrichtung (5) ist ebenfalls verstellbar ausgebildet und kann an unterschiedliche Werkstücke (2,3), insbesondere an verschiedene Werkstückdurchmesser, adaptiert werden. Die Schutzeinrichtung (5) und der Effektor (4) sind dabei unabhängig voneinander verstellbar und haben jeweils eine eigene steuerbare, angetriebene Stelleinrichtung (12,22) für die besagte Adaption.

Die Schutzeinrichtung (5) weist einen Kranz von verstellbaren Schutzelementen (16,17) auf. Diese sind z.B. als Finger ausgebildet, die sich in Richtung der Achse (10) erstrecken. Die Finger (16,17) können eine gerade stiftartige bzw. zylindrische Form haben. Sie können alternativ eine gebogene Form besitzen. Insbesondere kann der obere Fingerbereich am freien Ende abgebogen sein, bevorzugt nach innen und in Richtung zur Achse (10). Die Schutzelemente (16,17) ragen axial über die Greifelemente (11) und die Schnittstelle (6) hinaus. Sie können auch über eine Teilbereich oder das gesamte Werkstück (2,3) ragen. Ein kurzes Werkstück (2) kann ggf. am Rand von den abgebogenen Fingerenden übergriffen werden.

Die Schutzelemente (16,17) bestehen vorzugsweise zumindest bereichsweise aus Kunststoff. Sie können alternativ aus einem anderen hinreichend steifen und ggf. an der Oberfläche relativ weichen Material bestehen. Die Schutzelemente (16,17) können eine ergonomisch günstige, insbesondere gerundete Form aufweisen.

Der Kranz (18) hat eine kreisähnliche Form, wobei die Schutzelemente (16,17) im Wesentlichen konzentrisch zur Achse (10) angeordnet sind. Sie sind dabei in Umfangsrichtung des Kranzes (18) zueinander distanziert und außerdem abwechselnd mit einem seitlichen bzw. quer zur Umfangsrichtung ausgerichteten Versatz (32) angeordnet. Hierdurch sind ein Teil der sog. inneren Schutzelemente (16) näher zur Achse (10) als die anderen, sog. äußeren Schutzelemente (17) angeordnet.

Der Kranz (18) von Schutzelementen (16,17) kann mittels der Stelleinrichtung (22) in der Weite bzw. im Durchmesser verstellt werden. Hierdurch können die Schutzelemente (16,17) an das Werkstück (2,3) angenähert werden und bedarfsweise eng an dessen Außenkontur anschließen. Dies ist für den Unfallschutz von Vorteil. Die Verstellmöglichkeit ist über einen großen Bereich gegeben, wobei die Weite bzw. der Durchmesser des Kranzes (18) um den Faktor 2 oder größer variieren kann. Figur 1 und 2 zeigen hierzu verschiedene Verstellmöglichkeiten. In Figur 5 ist eine Ausgangsposition mit maximaler Weite des Kranzes (18) dargestellt.

Durch den vorerwähnten Versatz (32) sind bei den unterschiedlichen Kranzdurchmessern die Abstände zwischen den jeweils benachbarten Schutzelementen (16,17) im Wesentlichen gleich. Die Schutzelemente (16,17) verhindern dadurch einen seitlichen bzw. radialen Zugriff des Werkers (38) zur Greifeinrichtung (4), zur Schnittstelle bzw. Verbindungsstelle (6) und zumindest zu einem Teilbereich des Werkstücks (2,3). Ein längeres Werkstück (3) kann z.B. gemäß Figur 2 axial über die Schutzelemente (16,17) hinausragen.

Die Schutzeinrichtung (5) weist eine Führungseinrichtung (24) für die verstellbaren Schutzelemente (16,17) im Kranz (18) auf. Die Führungseinrichtung (24) kann in unterschiedlicher Weise ausgebildet sein. In den gezeigten und bevorzugten Ausführungsbeispielen ist sie als Kulissenführung gestaltet. Sie weist einander überschneidende Führungsbahnen (25,26,27) für die Schutzelemente (16,17) auf. Jedes Schutzelemente (16,17) steht dabei mit mehreren Führungsbahnen (25,26,27) im führenden und bevorzugt formschlüssigen Eingriff.

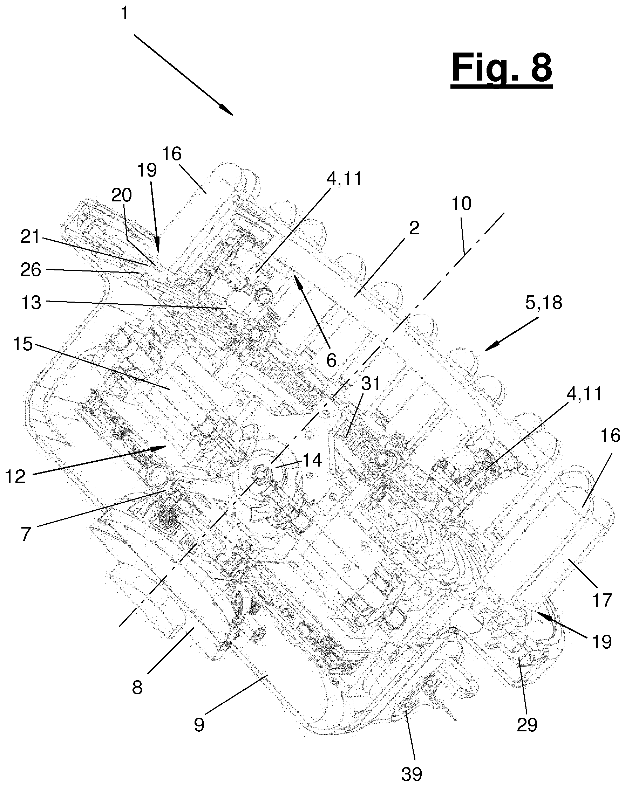

Der Eingriffsbereich liegt am Fuß (19) der Schutzelemente (16,17). Wie Figur 8 verdeutlicht, haben die Schutzelemente (16,17) an dieser Stelle einen verjüngten axialen Zapfen (20), der in die entsprechend schmalen Führungsbahnen (25,26,27) eingreift. Ferner ist im mittleren Zapfenbereich ein verbreiteter Sicherungsbund (21) vorhanden, der ein axiales Abheben der Schutzelemente (16,17) verhindert.

Wie Figur 1, 2, 5, 6 und 7 verdeutlichen, ist jedes Schutzelement (16,17) an einer eigenen Führungsbahn (25) angeordnet. Die Führungsbahnen (25) haben in den gezeigten Ausführungsbeispielen eine radiale Ausrichtung zur Achse (10) und sind in einem Kreis um die Achse (10) angeordnet. Alternativ können sie eine windschiefe oder schräge Ausrichtung zur Achse (10) haben und dabei ebenfalls in einem Kreis angeordnet sein. Die Führungsbahnen (25) sind an einem plattenförmigen Träger (28) angeordnet, der stationär am Gestell (7) befestigt und abgestützt ist. Die Führungsbahnen (25) sind als Schlitze ausgebildet und haben bevorzugt eine gerade Erstreckung. Alternativ ist eine andere, z.B. gebogene Formgebung möglich.

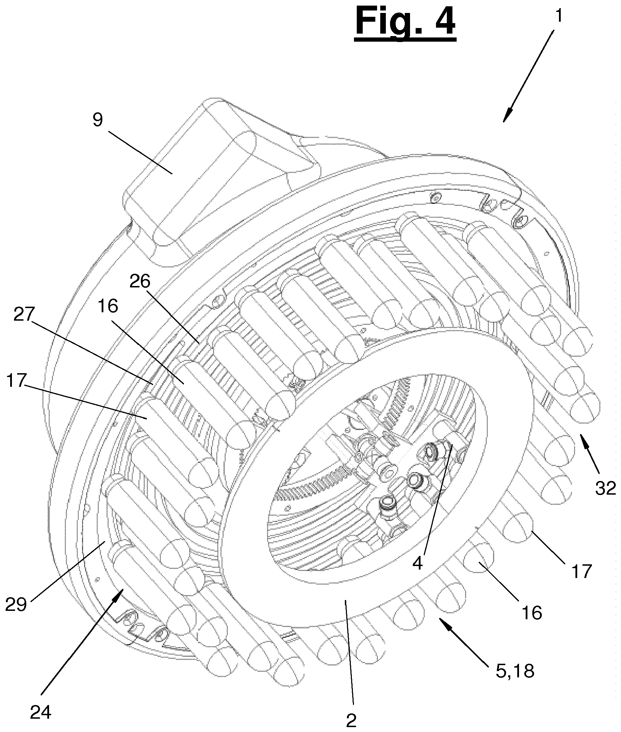

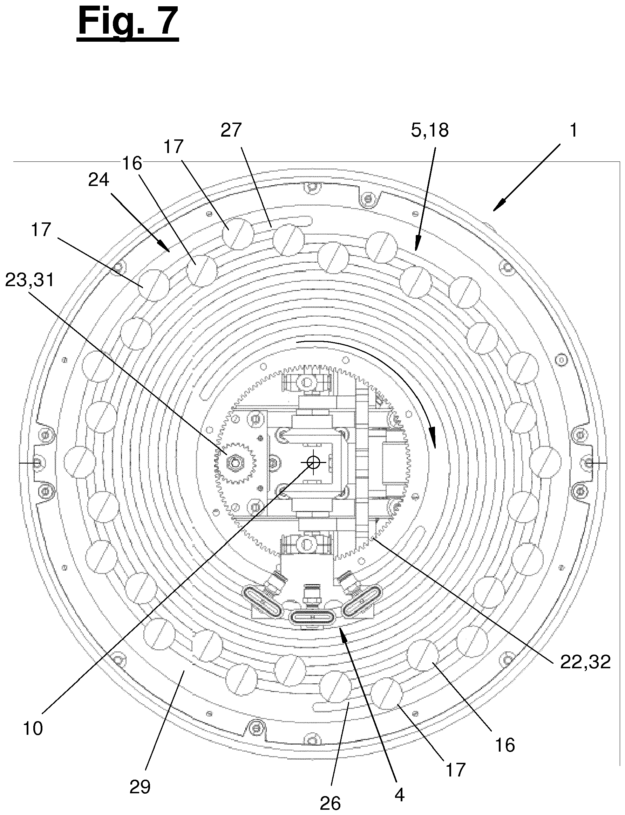

Figur 4 und 7 verdeutlichen die anderen Führungsbahnen (26,27), die jeweils in einer Spiralform um die Achse (10) angeordnet sind. Mehrere Schutzelemente (16,17) sind dabei in Umfangsrichtung hintereinander und mit Abstand an einer gemeinsamen Führungsbahn (26,27) angeordnet. In der gezeigten Ausführungsform sind zwei ineinander greifende spiralförmige Führungsbahnen (26,27) vorhanden, wobei die Schutzelemente (16,17) in Umfangsrichtung gesehen in einer Reihe hintereinander mit Abstand und über einen Bogenwinkel von ca. 360° mit ihrer jeweiligen spiralförmigen Führungsbahn (26,27) im Eingriff stehen. Die beiden Schutzelement-Reihen sind dabei in Umfangsrichtung versetzt bzw. auf Lücke angeordnet. Außerdem ergibt sich der besagte seitliche oder quer gerichtete Versatz (32). Die Führungsbahnen (26,27) sind um 180° versetzt.

Die Führungsbahnen (26,27) sind gemeinsam an einem bevorzugt plattenförmigen Träger (29) angeordnet. Sie können z.B. als vertiefte axiale Nuten in der Trägeroberseite ausgebildet sein. Die Sicherungsbunde (21) befinden sich zwischen den parallelen Trägern (28,29).

Die Träger (28,29) sind relativ zueinander beweglich am Gestell (7) gelagert. In den gezeigten Ausführungsformen ist der eine Träger (28) mit den schlitzartigen Führungsbahnen (25) stationär angeordnet und der andere Träger (29) mit den spiralförmigen Führungsbahnen (26,27) beweglich am Gestell (7) gelagert. Er ist insbesondere drehbar um die zentrale Achse (10) gelagert.

Der Träger (29) ist mit der Stelleinrichtung (22) verbunden, die ihn drehend um die zentrale Achse (10) antreibt. Figur 7 zeigt die Drehrichtung.

Die Stelleinrichtung (22) besitzt ebenfalls ein steuerbares Antriebsmittel (23), das bevorzugt als Motor, insbesondere als Elektromotor ausgebildet ist. Sie weist ferner ein Getriebe (30,31) zur Verbindung zwischen Antriebsmittel (23) und Träger (29) auf. Das Getriebe besteht aus einem mit dem Antriebsmittel (23) verbundenen Ritzel (30) und einem Zahnkranz (31) am inneren Rand einer zentralen Öffnung (33) des Trägers (29).

Der andere Träger (28) kann ebenfalls eine solche zentrale Öffnung (33) aufweisen. Die Öffnung (33) bietet Raum für die Verstellbewegungen der Schlitten (13) des Effektors (4). Die Schlitten haben eine abgewinkelte Form und greifen axial aus der Öffnung (33) und radial über beide Träger (28,29).

Wenn die Stelleinrichtung (22) der Schutzeinrichtung (5) betätigt wird und den Träger (29) in Richtung des Pfeils von Figur 7 dreht, gleiten die Schutzelemente (16,17) in ihren Führungsbahnen (26,27) in Umfangsrichtung entlang. Sie werden dabei durch die in der gezeigten Drehrichtung sich verjüngende Spiralform und durch die Anlage an den Wänden der schlitzartigen Führungsbahnen (25) in Richtung zur Achse (10) nach innen bewegt. Bei einer Drehrichtungsumkehr wandern sie nach außen.

Die Drehbewegung und die radiale Verstellung der Schutzelemente (16,17) kann gesteuert oder geregelt werden. Eine Steuerung ist z.B. über eine Positionsvorgabe im Motorkontroller des Antriebsmittels (23) möglich. Alternativ kann eine lastbedingte Abschaltung in der inneren Endlage bei Kontakt mit dem Werkstück (2,3) und/oder in der äußeren Lage durch Anschlag am Schlitzende erfolgen. Die Endabschaltung kann z.B. über die Messung des Motordrehmoments und dessen Anstieg im Anschlagbereich erfolgen.

Durch die in Figur 7 gezeigte Spiralform der Führungsbahnen (26,27) hat der Kranz (18) von Schutzelementen (16,17) nur eine angenäherte Kreisform. Außerdem ergibt sich der seitliche oder quer gerichtete Versatz (32). Die Versatzrichtung wechselt bei Beginn der zweiten Spiralbahn (26). Dabei werden die dortigen Schutzelemente zu äußeren Schutzelementen (17) und die auf der zuvor äußeren Spiralbahn (27) befindlichen Schutzelemente ab dieser Übergangsstelle zu inneren Schutzelementen (16). Diese Versatzänderung ist in Figur 7 dargestellt und bewirkt eine zumindest angenäherte konzentrische Kreisform des Kranzes (18).

Die Stelleinrichtung (22) der Schutzeinrichtung (5), insbesondere das Antriebsmittel (23), kann ebenfalls mit der Robotersteuerung (37) verbunden sein. Die Ansteuerung des Roboterwerkzeugs (1) und seiner Komponenten erfolgt dadurch von der Robotersteuerung (37) oder einer anderen Steuerung aus.

Die Stelleinrichtungen (12,22) sind am Gestell (7) angeordnet und abgestützt. Sie können vom Gehäuse (8) schützend umschlossen werden.

Die Schutzeinrichtung (5), insbesondere die Schutzelemente (16,17) können außerdem eine nicht dargestellte Sensorik, insbesondere mehrere Kontaktsensoren, aufweisen. Hierüber kann ein eventueller Berührungskontakt mit dem Werker (38) detektiert und ausgewertet bzw. verarbeitet werden. Bei einem detektierten Kontakt kann der Industrieroboter (35) angehalten oder verlangsamt werden. Er kann auch zu einer Rückwärtsbewegung oder einer Ausweichbewegung veranlasst werden.

Der Industrieroboter (35) kann positionsgesteuerte Roboterachsen aufweisen. Er kann alternativ als taktiler Roboter ausgebildet sein und kraftgesteuerte oder kraftgeregelte Roboterachsen aufweisen. Er kann außerdem eine Nachgiebigkeitsregelung der Roboterachsen aufweisen, die z.B. als reine Kraftregelung oder als eine Kombination von Kraft- und Positionsregelung ausgebildet ist. Ein Berührungskontakt kann auch vom Industrieroboter (35) mittels einer zugeordneten, bevorzugt integrierten und an den Roboterachsen angeordneten Sensorik detektiert werden.

Abwandlungen der gezeigten und beschriebenen Ausführungsformen sind in verschiedener Weise möglich. Insbesondere können die Merkmale der verschiedenen Ausführungsbeispiele untereinander kombiniert und auch vertauscht werden.

Die Antriebskinematik der Stellvorrichtung (22) kann vertauscht sein, wobei der Träger (28) mit den schlitzartigen Führungsbahnen (25) angetrieben wird. Die Verstellmöglichkeiten des Effektors (4) und der Schutzeinrichtung (5) sowie die Stellantriebe (12,22) können gekoppelt sein. Ferner ist es möglich, die Stelleinrichtung (22) und die Führungseinrichtung (24) für die Schutzeinrichtung (5) in anderer Weise auszubilden und z.B. die Schutzelemente (16,17) nur an ringförmig verteilten, radialen oder windschiefen Führungsbahnen (25) zu führen und einzeln oder gruppenweise mit einem Zug- und Schubantrieb oder mit einem Zugantrieb und einem federelastischen Rückstellelement linear anzutreiben.

### BEZUGSZEICHENLISTE

- 1: Roboterwerkzeug
- 2: Werkstück
- 3: Werkstück
- 4: Effektor, Greifeinrichtung
- 5: Schutzeinrichtung, Schutzkragen
- 6: Schnittstelle, Verbindungsbereich
- 7: Gestell
- 8: Anschluss, Roboteranschluss
- 9: Gehäuse
- 10: Achse
- 11: Greifelement, Sauger
- 12: Stelleinrichtung
- 13: Träger, Schlitten
- 14: Antriebsmittel, Motor
- 15: Getriebe
- 16: Schutzelement, Finger, innen
- 17: Schutzelement, Finger, außen
- 18: Kranz
- 19: Fuß
- 20: Zapfen
- 21: Sicherungsbund
- 22: Stelleinrichtung
- 23: Antriebsmittel, Motor
- 24: Führung, Kulissenführung
- 25: Führungsbahn, Führungsschlitz radial
- 26: Führungsbahn, Führungsnut, Spirale
- 27: Führungsbahn, Führungsnut, Spirale
- 28: Träger, Platte stationär
- 29: Träger, Platte angetrieben
- 30: Getriebe, Ritzel
- 31: Getriebe, Zahnkranz
- 32: Versatz
- 33: Öffnung
- 34: Prozesseinrichtung, Prozessstation
- 35: Manipulator, Industrieroboter

- 36: Abtriebselement, Abtriebsflansch
- 37: Steuerung, Robotersteuerung
- 38: Werker
- 39: Anschluss Betriebsmittel

## Patentansprüche

1. Roboterwerkzeug mit einem Effektor (4), insbesondere einer Greifeinrichtung, für ein Werkstück (2,3), wobei das Roboterwerkzeug (1) eine Schutzeinrichtung (5) aufweist, welche den Effektor (4) und zumindest einen Teilbereich des Werkstücks (2,3) umschließt und gegen einen Werkerzugriff von außen abschirmt, **dadurch gekennzeichnet, dass** die Schutzeinrichtung (5) und der Effektor (4) eine steuerbare, angetriebene Stelleinrichtung (12,22) für eine Adaption an unterschiedliche Werkstücke (2,3) aufweisen.

2. Roboterwerkzeug nach Anspruch 1, **dadurch gekennzeichnet, dass** die Schutzeinrichtung (5) einen Schutzkragen um den Effektor (4) und das Werkstück (2,3) bildet, der einen Werkerkontakt mit dem Effektor (4) und der Schnittstelle (6) zum Werkstück (2,3) verhindert.

3. Roboterwerkzeug nach Anspruch 1 oder 2, **dadurch gekennzeichnet, dass** die Schutzeinrichtung (5) einen in der Weite verstellbaren Kranz (18) von verstellbaren Schutzelementen (16,17), insbesondere Fingern, aufweist.

4. Roboterwerkzeug nach Anspruch 3, **dadurch gekennzeichnet, dass** die Schutzelemente (16,17) in Umfangsrichtung des Kranzes (18) zueinander distanziert und dabei abwechselnd mit einem seitlichen Versatz (32) angeordnet sind.

5. Roboterwerkzeug nach Anspruch 3 oder 4, **dadurch gekennzeichnet, dass** die Schutzeinrichtung (5) eine Führungseinrichtung (24), insbesondere eine Kulissenführung, für die verstellbaren Schutzelemente (16,17) aufweist.

6. Roboterwerkzeug nach Anspruch 5, **dadurch gekennzeichnet, dass** die Führungseinrichtung (24), insbesondere die Kulissenführung, einander überschneidende Führungsbahnen (25,26,27) für die Schutzelemente (16,17) aufweist, wobei jedes Schutzelement (16,17) mit mehreren Führungsbahnen (25,26,27) im führenden, bevorzugt formschlüssigen Eingriff steht.

7. Roboterwerkzeug nach Anspruch 5 oder 6, **dadurch gekennzeichnet, dass** die Führungseinrichtung (24), insbesondere die Kulissenführung, zwei oder mehr ineinander greifende spiralförmige Führungsbahnen (26,27) aufweist, wobei die Schutzelemente (16,17) in Umfangsrichtung gesehen abwechselnd mit einer spiralförmigen Führungsbahn (26,27) im Eingriff stehen.

8. Roboterwerkzeug nach Anspruch 7, **dadurch gekennzeichnet, dass** die Stelleinrichtung (22) mit einem Träger (29) für die spiralförmigen Führungsbahnen (26,17) verbunden ist und den Träger (29) drehend um eine Achse (10), insbesondere um eine zentrale Achse (10) des Roboterwerkzeugs (1), antreibt.

9. Roboterwerkzeug nach einem der vorhergehenden Ansprüche, **dadurch gekennzeichnet, dass** der verstellbare Effektor (4) als Greifeinrichtung ausgebildet ist und mehrere Greifelemente (11) aufweist, die mittels der Stelleinrichtung (12) im Abstand zur Achse (10) verstellbar sind.

10. Roboterwerkzeug nach einem der vorhergehenden Ansprüche, **dadurch gekennzeichnet, dass** die Stelleinrichtung (12) einen oder mehrere Träger (13), insbesondere Schlitten, für ein einzelnes Greifelement (11) oder für eine Gruppe von Greifelementen (11) sowie ein steuerbares Antriebsmittel (14), insbesondere einen Motor, und ein Getriebe (15) zur Verbindung mit dem Träger (13) aufweist.

11. Prozesseinrichtung aufweisend einen ein- oder mehrachsigen Manipulator (35), insbesondere einen mehrachsigen Industrieroboter, der ein Roboterwerkzeug (1) führt, **dadurch gekennzeichnet, dass** das Roboterwerkzeug (1) nach mindestens einem der Ansprüche 1 bis 10 ausgebildet ist.

12. Prozesseinrichtung nach Anspruch 11, **dadurch gekennzeichnet, dass** der Manipulator (35), insbesondere Industrieroboter, eine Steuerung (37) aufweist, die mit dem Roboterwerkzeug (1) verbunden ist.

13. Verfahren zum Betrieb eines Roboterwerkzeugs (1) mit einem Effektor (4), insbesondere einer Greifeinrichtung, für ein Werkstück (2,3), wobei der Effektor (4) und zumindest ein Teilbereich des Werkstücks (2,3) von einer Schutzeinrichtung (5) des Roboterwerkzeugs (1) umschlossen und gegen einen Werkerzugriff von außen abgeschirmt werden, **dadurch gekennzeichnet, dass** die Schutzeinrichtung (5) und der Effektor (4) durch eine steuerbares, angetriebene Stelleinrichtung (12,22) an unterschiedliche Werkstücke (2,3) adaptiert werden.

## Claims

1. Robot tool having an effector (4), in particular a gripping device, for a workpiece (2, 3), wherein the robot tool (1) has a protective device (5) which encloses the effector (4) and at least a section of the workpiece (2, 3) and shields same from external worker access, **characterized in that** the protective device (5) and the effector (4) have a controllable, driven setting device (12, 22) for adapting to different workpieces (2, 3).

2. Robot tool according to Claim 1, **characterized in that** the protective device (5) forms a protective collar around the effector (4) and the workpiece (2, 3), which prevents a worker from coming into contact with the effector (4) and the interface (6) to the workpiece (2, 3).

3. Robot tool according to Claim 1 or 2, **characterized in that** the protective device (5) has a size-adjustable ring (18) of adjustable protective elements (16, 17), in particular fingers.

4. Robot tool according to Claim 3, **characterized in that** the protective elements (16, 17) are spaced apart from one another in the circumferential direction of the ring (18) and in this case arranged alternately with a lateral offset (32).

5. Robot tool according to Claim 3 or 4, **characterized in that** the protective device (5) has a guide device (24), in particular a slotted guide, for the adjustable protective elements (16, 17) .

6. Robot tool according to Claim 5, **characterized in that** the guide device (24), in particular the slotted guide, has mutually overlapping guide tracks (25, 26, 27) for the protective elements (16, 17), wherein each protective element (16, 17) is engaged in a guiding, preferably form-fitting manner with several guide tracks (25, 26, 27).

7. Robot tool according to Claim 5 or 6, **characterized in that** the guide device (24), in particular the slotted guide, has two or more interlocking spiral guide tracks (26, 27), wherein the protective elements (16, 17) are alternately engaged with a spiral guide track (26, 27) as seen in the circumferential direction.

8. Robot tool according to Claim 7, **characterized in that** the setting device (22) is connected to a carrier (29) for the spiral guide tracks (26, 17) and drives the carrier (29) in rotation about an axis (10), in particular about a central axis (10) of the robot tool (1).

9. Robot tool according to one of the preceding claims, **characterized in that** the adjustable effector (4) is in the form of a gripping device and has several gripping elements (11), the spacing of which with respect to the axis (10) is adjustable by means of the setting device (12).

10. Robot tool according to one of the preceding claims, **characterized in that** the setting device (12) has one or more carriers (13), in particular carriages, for an individual gripping element (11) or for a group of gripping elements (11), and a controllable drive means (14), in particular a motor, and a transmission (15) for connecting to the carrier (13).

11. Process device having a uniaxial or multiaxial manipulator (35), in particular a multiaxial industrial robot, which guides a robot tool (1), **characterized in that** the robot tool (1) is configured according to at least one of Claims 1 to 10.

12. Process device according to Claim 11, **characterized in that** the manipulator (35), in particular the industrial robot, has a controller (37) which is connected to the robot tool (1).

13. Method for operating a robot tool (1) having an effector (4), in particular a gripping device, for a workpiece (2, 3), wherein the effector (4) and at least a section of the workpiece (2, 3) are enclosed by a protective device (5) of the robot tool (1) and are shielded from external worker access, **characterized in that** the protective device (5) and the effector (4) are adapted to different workpieces (2, 3) by a controllable, driven setting device (12, 22).

## Revendications

1. Outil robot avec un effecteur (4), en particulier un dispositif de préhension, pour une pièce (2, 3), dans lequel l'outil robot (1) présente un dispositif de protection (5), qui entoure l'effecteur (4) et au moins une région partielle de la pièce (2, 3) et les protège contre un accès d'un travailleur par l'extérieur, **caractérisé en ce que** le dispositif de protection (5) et l'effecteur (4) présentent un dispositif de réglage entraîné réglable (12, 22) pour une adaptation à des pièces différentes (2, 3).

2. Outil robot selon la revendication 1, **caractérisé en ce que** le dispositif de protection (5) forme un collet de protection autour de l'effecteur (4) et de la pièce (2, 3), qui empêche un contact du travailleur avec l'effecteur (4) et l'interface (6) vers la pièce (2, 3).

3. Outil robot selon la revendication 1 ou 2, **caractérisé en ce que** le dispositif de protection (5) présente une couronne ajustable en largeur (18) d'éléments de protection ajustables (16, 17), en particulier de doigts.

4. Outil robot selon la revendication 3, **caractérisé en ce que** les éléments de protection (16, 17) sont espacés l'un de l'autre dans la direction périphérique de la couronne (18) et sont en l'occurrence disposés en alternance avec un décalage latéral (32).

5. Outil robot selon la revendication 3 ou 4, **caractérisé en ce que** le dispositif de protection (5) présente un dispositif de guidage (24), en particulier un guidage à coulisse, pour les éléments de protection ajustables (16, 17).

6. Outil robot selon la revendication 5, **caractérisé en ce que** le dispositif de guidage (24), en particulier le guidage à coulisse, présente des voies de guidage (25, 26, 27) se coupant mutuellement pour les éléments de protection (16, 17), dans lequel chaque élément de protection (16, 17) est en prise de guidage, de préférence par emboîtement, avec plusieurs voies de guidage (25, 26, 27) .

7. Outil robot selon la revendication 5 ou 6, **caractérisé en ce que** le dispositif de guidage (24), en particulier le guidage à coulisse, présente deux ou plus de deux voies de guidage en forme de spirale (26, 27) interférant l'une dans l'autre, dans lequel les éléments de protection (16, 17) considérés en direction périphérique sont en prise en alternance avec une voie de guidage en forme de spirale (26, 27).

8. Outil robot selon la revendication 7, **caractérisé en ce que** le dispositif de réglage (22) est relié à un support (29) pour les voies de guidage en forme de spirale (26, 17) et entraîne le support (29) en rotation autour d'un axe (10), en particulier autour d'un axe central (10) de l'outil robot (1).

9. Outil robot selon une des revendications précédentes, **caractérisé en ce que** l'effecteur ajustable (4) est réalisé en forme de dispositif de préhension et présente plusieurs éléments de préhension (11), dont la distance par rapport à l'axe (10) est ajustable au moyen du dispositif de réglage (12).

10. Outil robot selon une des revendications précédentes, **caractérisé en ce que** le dispositif de réglage (12) présente un ou plusieurs support (s) (13), en particulier des chariots, pour un élément de préhension individuel (11) ou pour un groupe d'éléments de préhension (11) ainsi qu'un moyen d'entraînement réglable (14), en particulier un moteur, et une transmission (15) pour la liaison avec le support (13).

11. Moyen de traitement présentant un manipulateur uniaxe ou multiaxe (35), en particulier un robot industriel multiaxe, qui guide un outil robot (1), **caractérisé en ce que** l'outil robot (1) est réalisé selon au moins une des revendications 1 à 10.

12. Moyen de traitement selon la revendication 11, **caractérisé en ce que** le manipulateur (35), en particulier le robot industriel, présente une commande (37), qui est reliée à l'outil robot (1).

13. Procédé de conduite d'un outil robot (1) avec un effecteur (4), en particulier un dispositif de préhension, pour une pièce (2, 3), dans lequel on entoure l'effecteur (4) et au moins une région partielle de la pièce (2, 3) avec un dispositif de protection (5) de l'outil robot (1) et on les protège contre un accès d'un travailleur par l'extérieur, **caractérisé en ce que** l'on adapte le dispositif de protection (5) et l'effecteur (4) à des pièces différentes (2, 3) au moyen d'un dispositif de réglage (12, 22) entraîné réglable.
